# EUROPEAN PATENT SPECIFICATION

(11) **EP 4 653 352 B1**
(45) Date of publication and mention of the grant of the patent: **09.12.2026**
(21) Application number: 25178420.3
(22) Date of filing: 23.05.2025
(51) Int. Cl.: B65G 47/84

(54) **OBJECT TRANSFER STATION**
OBJEKTÜBERGABESTATION
STATION DE TRANSFERT D'OBJETS

(30) Priority: 24.05.2024 IT 202400011770
(43) Date of publication of application: 26.11.2025
(73) Proprietor: O.A.M.- Società per Azioni, 40065 Pianoro (Bologna) (IT)
(72) Inventor: MARTELLI, Antonio, 07021 Arzachena OT (IT)
(74) Representative: Modiano, Micaela Nadia

(56) References cited:
- EP-B1- 0 895 951
- EP-B1- 3 129 294
- US-A- 4 643 633
- US-A- 4 773 525
- US-A1- 2002 110 448

## Description

The present invention relates to an object transfer station, for example for delivering objects to a cartoning machine.

Among the many industrial sectors that nowadays avail of automatic machines for executing various kinds of machining and treatments, numerous sectors make use of machines called "cartoning machines".

For example in fact, in the pharmaceutical, cosmetic or food sectors, such machines are used to insert, into external packages, either primary containers such as boxes or cartons, the enclosures, or secondary containers, that contain the actual consumer product.

Such enclosures can take the form of pouches, blister packs, vials, bottles, drums, sticks, preformed tubs or the like, and the task of the cartoning machine is to insert these objects (and optionally the instruction sheet) into the external package, while ensuring high productivity and maximum quality (another obviously crucial parameter in the sectors mentioned).

In this context, usually, the enclosures prepared upstream by another machine are fed to a magazine mounted on board the cartoning machine, from which they are drawn one by one by automated systems of various types, in order to make them available to the apparatuses that are responsible for inserting them into the external package.

However, this is a rather complex operating step, in that it requires the involvement of gearings and drive units which can be quite complex, and which limit the number of enclosures fed downstream within a time unit, and therefore, in the final analysis, limit the productivity of the cartoning machine proper.

It should be noted moreover that the transfer and feeding of objects or semi-finished products also represents a problem or a bottleneck for other types of automatic machines, in different contexts to that just described.

The document US 4773525A describes a rotary transfer conveyor capable of moving articles like bubble packs of pills between two angularly offset locations. In particular, said document US 4773525A discloses an object transfer station according to the preamble of claim 1.

The aim of the present invention is to solve the abovementioned problems, by providing a station that is capable of transferring objects with high productivity.

Within this aim, an object of the invention is to provide a product packaging preparation plant that can operate with high productivity and without interruptions or bottlenecks caused by the feeding of secondary containers.

Another object of the invention is to provide a station that is versatile, that makes it possible to perform further tasks or treatments on the transferred objects.

Another object of the invention is to provide a station and a plant that ensure a high reliability of operation.

Another object of the invention is to provide a station and a plant that adopt a technical and structural architecture alternative to those of conventional solutions.

Another object of the invention is to provide a station and a plant that can be easily obtained starting with elements and materials readily available on the market.

Another object of the invention is to provide a station and a plant at low cost which are safely applied.

This aim and these and other objects which will become more apparent hereinafter are achieved by an object transfer station according to claim 1 and by a plant according to claim 10.

Further characteristics and advantages of the invention will become more apparent from the description of some preferred, but not exclusive, embodiments of the station and of the plant according to the invention, which are illustrated by way of non-limiting example in the accompanying drawings wherein:
Figure 1 is a perspective view of the station according to the invention, in a first embodiment;
Figures 2 and 3 are perspective views of a detail of the station of Figure 1, with the sliders in the inner and outer stroke limit positions respectively;
Figure 4 is a view from above of the station of Figure 1;
Figure 5 is a front elevation view of the station of Figure 1, with some components removed or shown transparent;
Figure 6 is a perspective view of the station according to the invention, in a second embodiment;
Figure 7 is a view from above of the station of Figure 6;
Figure 8 is a front elevation view of the station of Figure 6, with some components removed or shown transparent;
Figure 9 is a greatly enlarged detail of the station of Figure 6, in a perspective view;
Figure 10 is a perspective view of the station according to the invention, in a third embodiment;
Figure 11 is a perspective view of a detail of the station of Figure 10, with some components removed or shown transparent;
Figure 12 is a view from above of the station of Figure 10;
Figure 13 is a front elevation view of the station of Figure 10, with some components removed or shown transparent;
Figure 14 is a perspective view of an example of configuration of plant according to the invention;
Figure 15 is a greatly enlarged detail of Figure 14.

With reference to the figures, the reference numeral 1 generally designates an object transfer station.

In this regard, it is appropriate from this point onward to point out that the station 1 can be applied in any industrial sector or context, for transferring objects (or semi-finished products or manufactured articles or parts) of any type, while remaining within the scope of protection claimed herein.

That notwithstanding, in the following pages we will look at an example of application of the station 1 of significant practical interest, in order to emphasize the functionality of the invention and illustrate its further potential.

The station 1 comprises first of all at least one supporting frame 2 for a gearing 3; the frame 2 can for example comprise a box-like casing 4 (on which the gearing 3 stands) supported by supporting feet 5 and containing some of the components of the station 1 (including the components that drive the gearing 3).

In turn, the gearing 3 comprises at least one turntable 6 which is turned about a fixed main axis A by a rotating shaft 7 (which, with its longitudinal axis, effectively defines the main axis A). The turntable 6 can be disk-shaped, coaxial with the main axis A.

The rotation of the rotating shaft 7 can be driven by a motor 8 (optionally chosen to be of known type), which can be accommodated in the casing 4 and in any case is supported by the frame 2.

In the preferred solution, the main axis A is vertical (perpendicular to the ideal resting plane of the frame 2), but different implementation choices are not ruled out.

Furthermore, the gearing 3 comprises at least one planet gear 9, which meshes with a (typically fixed) ring gear 10 provided with an internal set of teeth 10a and which is supported by the turntable 6 so that it can rotate about a respective secondary axis B, which in turn rotates (in parallel) about the main axis A.

Hence by virtue of this configuration, the planet gear 9 traces an orbit of sorts about the main axis A by virtue of the rotary motion of the turntable 6 that supports it; furthermore, during the orbit and owing to the meshing with the ring gear 10 (which does not rotate), the planet gear 9 is forced to rotate on itself (about the secondary axis B), so ensuring that any point on it describes an epicycle.

The secondary axis B can be defined by a first pin 11 mounted on the turntable 6 (for example in a peripheral region, as in the accompanying figures).

Effectively therefore, in the gearing 3 the turntable 6 behaves like a carrier assembly or sun gear of a planetary gear train.

Although allowing for the possibility for the gearing 3 and the station 1 to comprise a single planet gear 9, preferably the station 1 (the gearing 3 in particular) comprises a plurality of planet gears 9, which mesh with the ring gear 10 and are supported by the turntable 6 so that they can rotate about respective secondary axes B. The planet gears 9 are preferably distributed equally around the main axis A, preferably along the peripheral region of the turntable 6.

In this context, the various different embodiments in the accompanying figures adopt three or four planet gears 9, but the scope of protection extends to cover the use of any number of planet gears 9, according to the specific requirements.

Furthermore, according to the invention the station 1 comprises at least one (substantially radial) arm 12, which defines a track 13 for guiding translation (on a plane perpendicular to the main axis A) and which is supported directly or indirectly by the shaft 7 so that it can rotate about the main axis A. The translation occurs along a direction away from or toward the main axis A.

In the present discussion, "indirectly" supported means that one or more further components are interposed between the components involved.

While allowing for the possibility that the station 1 can comprise a single arm 12, preferably the station 1 comprises a plurality of arms 12, which define respective tracks 13 and are supported directly or indirectly by the shaft 7 so that they can rotate about the main axis A. In more detail, the station 1 comprises a number of arms 12 equal to the number of planet gears 9 (in fact, as will become better apparent below, each planet gear 9 interacts with a respective arm 12).

Furthermore, according to the invention the station 1 comprises at least one unit 14 for transferring objects, which comprises a slider 15 and an operating member 16.

The slider 15 is coupled slideably to the track 13 of the arm 12 and is coupled rotatably to the corresponding planet gear 9 (about an auxiliary axis parallel to the main axis A, for example defined by a second pin 15a).

The operating member 16 is configured at least to pick up and temporarily hold objects and is supported by the slider 15 so that it can rotate about a respective horizontal axis C (which is typically perpendicular to the corresponding track 13).

The horizontal axis C is indicated only in some figures in order to not excessively over-complicate the drawings.

So in fact:
- the unit 14 and the arms 12 rotate about the main axis A, because they are pulled by the planet gear 9 which in turn is made rotate, as has been seen, by the turntable 6,
- (while it rotates about the main axis A) the unit 14, and therefore the slider 15 and the operating member 16, slide practically radially, toward or away from the main axis A, by virtue of the translation of the slider 15 itself on the track 13, which supports the operating member 16,
- as needed, the operating member 16 can rotate about the horizontal axis C in order to optimally perform the pickup or setdown of an object,
- the final rule of motion of the unit 14 depends on the transmission ratio between the planet gear 9 and the ring gear 10.

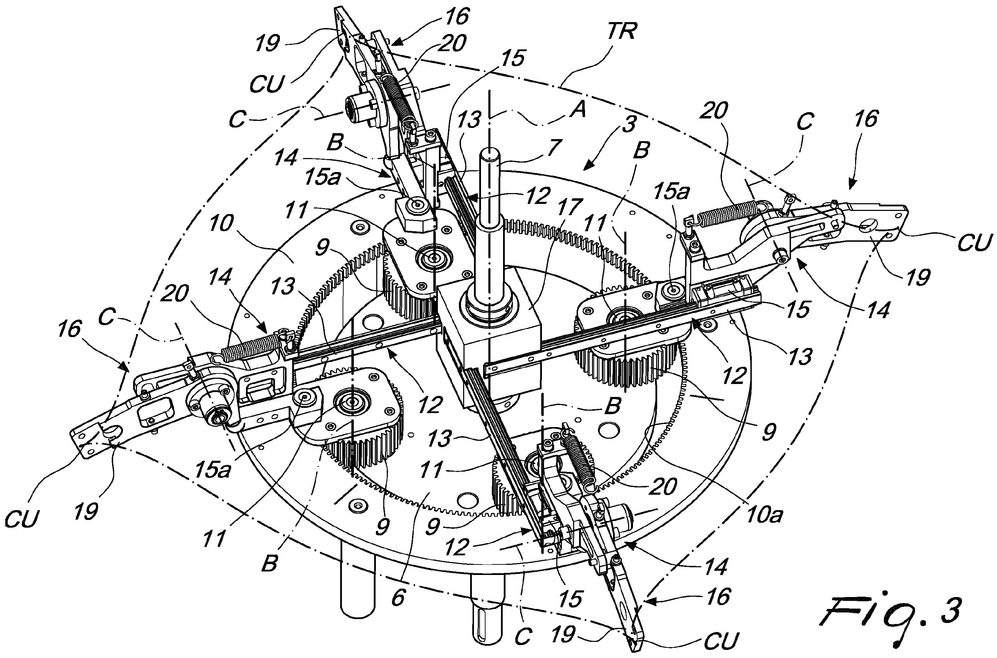

The final trajectory TR of the unit 14 is thus constituted by a closed curve around the main axis A, "starred" in shape, in which a plurality of cusps CU or projections are visible, "pointed" or rounded to a greater or lesser extent: an example of this can be seen in the trajectory TR shown in Figure 3, in which there are four cusps CU (the actual number depends on the transmission ratio mentioned earlier).

Right at each cusp CU, the rotation of the operating member 16 can preferably be commanded to rotate about the horizontal axis C, so as to cause the lowering or raising of a portion thereof and optimally perform the pickup or setdown of an object.

In more detail, the turntable 6 defines, with its rotation about the main axis A, a plurality of useful angular coordinates, wherein the slider 15 is located along the respective track 13 substantially at the outer stroke limit, at the maximum distance from the main axis A. The cusps CU or projections in fact correspond to these useful angular coordinates.

This solution makes it possible from this point onward to achieve the set aim: in fact, at each cusp CU or projection, the unit 14 moves outward (with respect to the main axis A and the turntable 6) and can optimally pick up an object from a first stall facing the station 1 or set it down at a second, by virtue of the capacity of the operating member 16 to rotate about the horizontal axis C: the transfer between the stalls occurs with a rotary motion (about the main axis A), which can easily be at a very high speed. Thus, the downstream station is fed the objects it needs, one after another and with high frequency, so providing a supply along the line that makes it possible to avoid the use of dedicated magazines (in the downstream station). The pace of supply is evidently dictated by the rotation speed of the turntable 6 (and by the number of units 14), with the possibility of ensuring a transfer and a delivery with high productivity rates, as indeed the invention sets out to achieve.

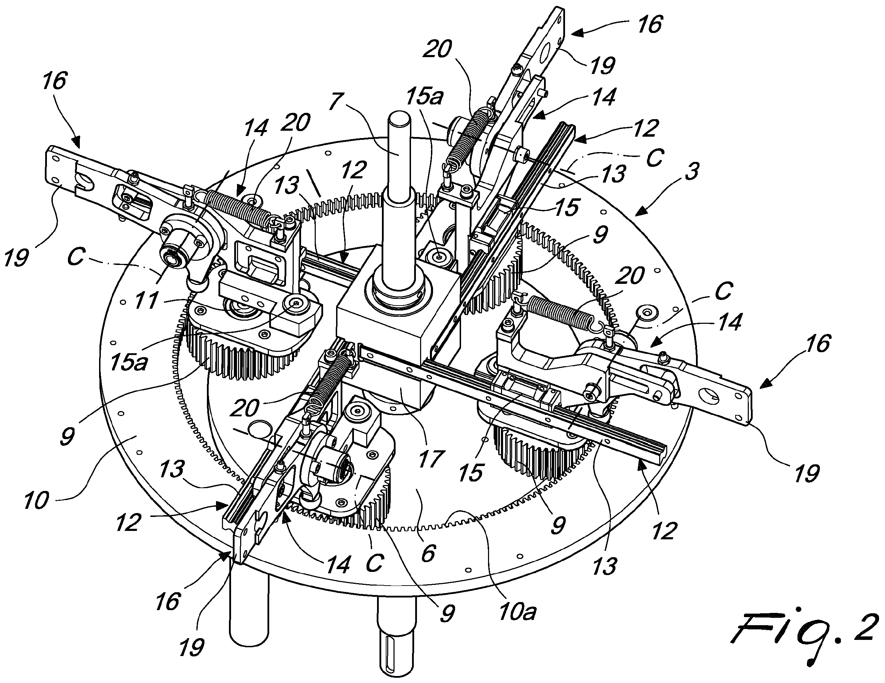

The outer stroke limit (and also the inner stroke limit, at the minimum distance from the main axis A) does not necessarily coincide with an end of the track 13, but (as can be seen in Figures 2 and 3) can be spaced apart from that end, as it depends on or is defined by the constraints imposed by the other components with which the slider 15 is associated.

The manner with which the operating member 16 is in practice induced to rotate about the horizontal axis C may be any, while remaining within the scope of protection claimed herein; on the following pages a possible example of this will be described, corresponding to what is shown in the accompanying figures, but this should in no way be understood as limiting of the application of the invention.

While allowing for the possibility that the station 1 can comprise only one unit 14, preferably the station 1 comprises a plurality of units 14 (to ensure greater productivity/transfer capacity): each one of these comprises a respective slider 15, coupled slideably to a corresponding track 13 and coupled rotatably to a corresponding planet gear 9, and a respective operating member 16, supported by the corresponding slider 15 so that it can rotate about a corresponding horizontal axis C (the horizontal axes C differ from one unit 14 to the next).

In more detail, the station 1 comprises a number of units 14 that is equal to the number of arms 12 (since each arm 12 supports one unit 14 and defines a corresponding track 13 to guide a corresponding slider 15) and to the number of planet gears 9 (each unit 14 is rotatably coupled to a respective planet gear 9).

What is said with reference to planet gears 9, arms 12, units 14 (and associated components), in the singular or in the plural, should therefore be understood to extend to each planet gear 9, arm 12, unit 14, each one of which is potentially present in any number in the station 1.

In the accompanying figures, which illustrate a possible and non-limiting embodiment of the invention, the track 13 comprises (or is constituted by) a profiled element with a transverse cross-section that is complementary to that of the slider 15 that slides on it.

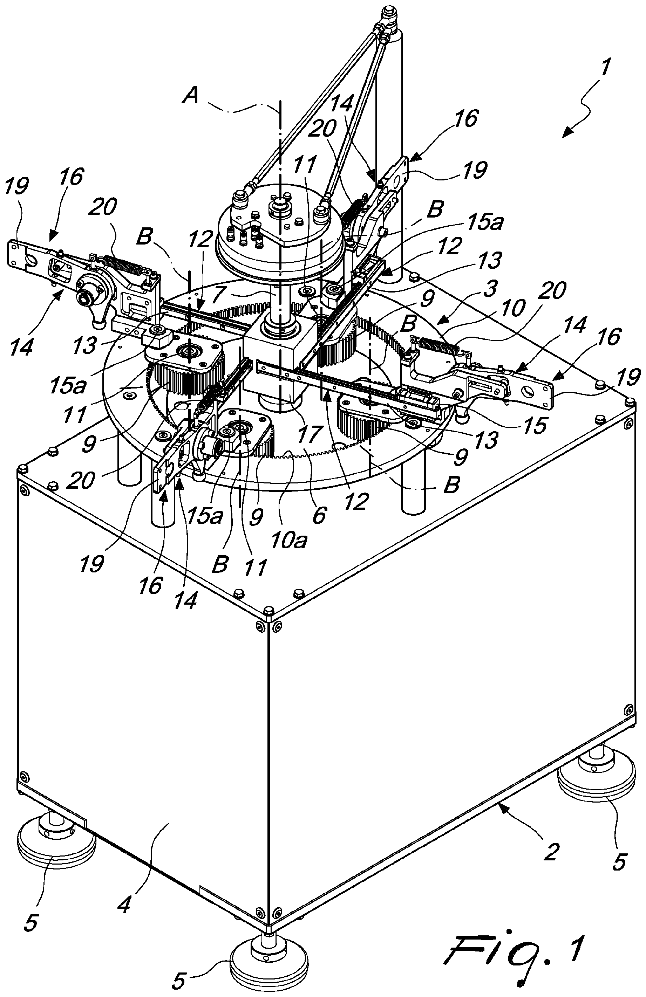

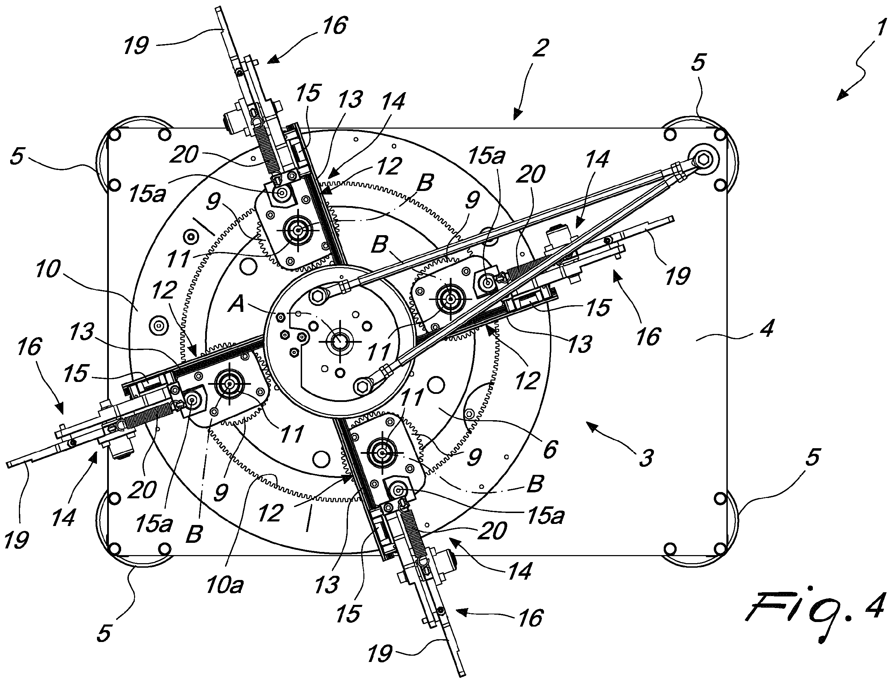

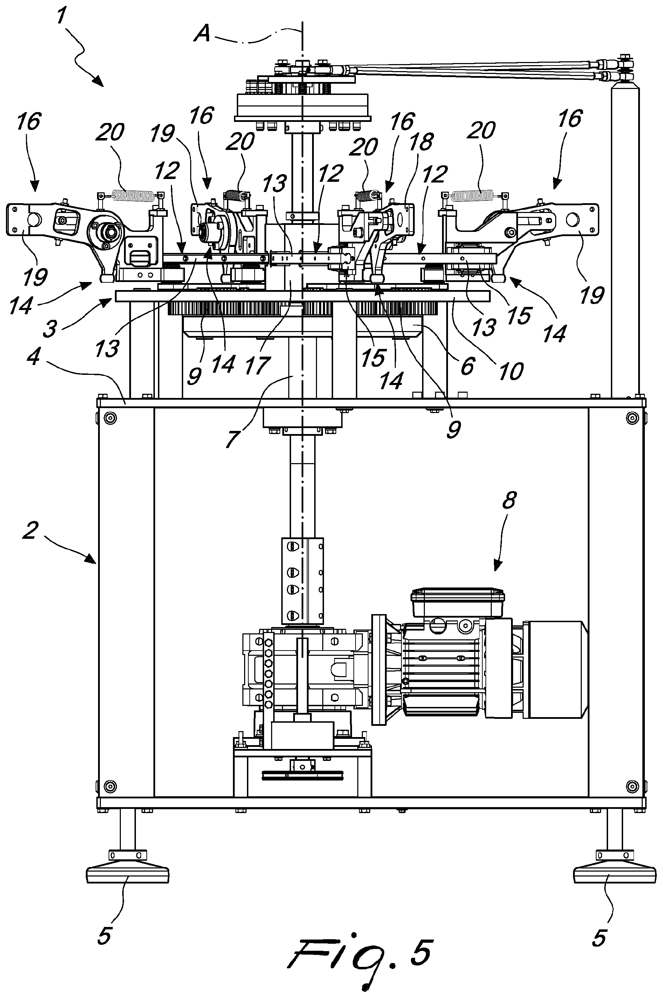

In a possible embodiment, which corresponds to the solution shown in Figures 1-5, the station 1 comprises a central supporting block 17, coupled rotatably to the shaft 7.

In the present discussion, a "rotatable" coupling or support means that the two cited components (in this case the block 17 and the shaft 7) form a rotary pair.

Each arm 12 is rigidly supported by the block 17.

Such an embodiment, wherein a single block 17 supports all the arms 12, so ensuring compactness and structural simplicity, is possible because the four arms 12 all move integrally together.

In particular, as can clearly be seen from these figures, an end portion of each track 13 is stably inserted into a slot provided along a lateral wall of the block 17, which can for example be cube-shaped or in any case prismatic (as a function of the number of arms 12 and tracks 13, obviously).

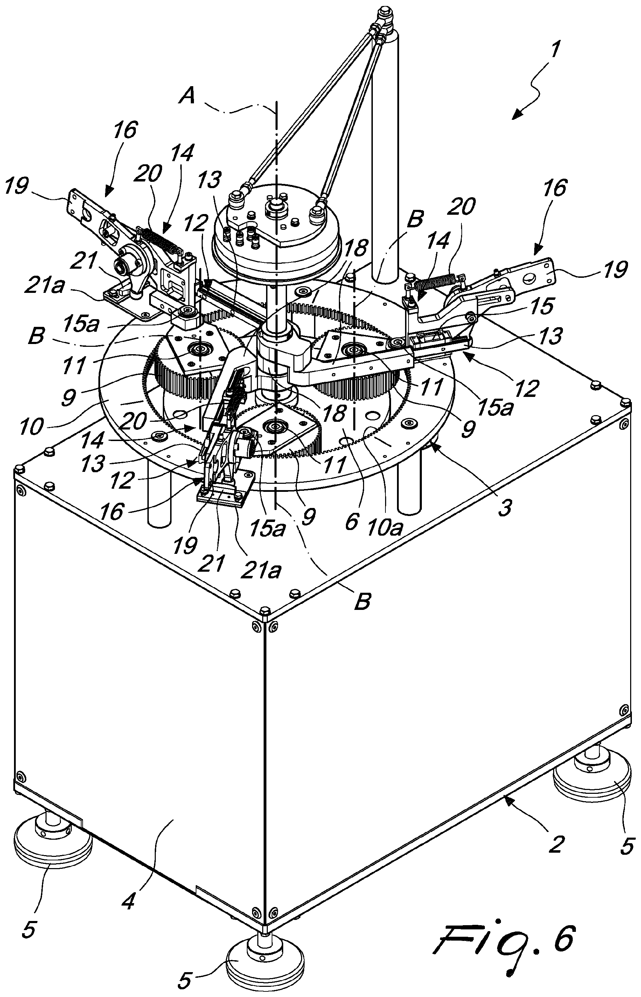

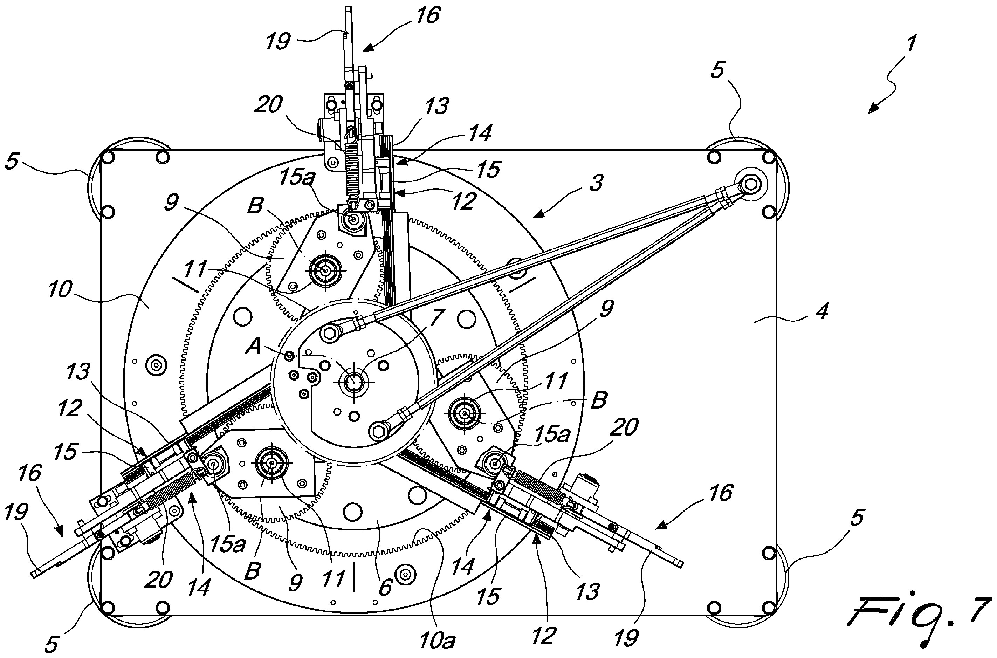

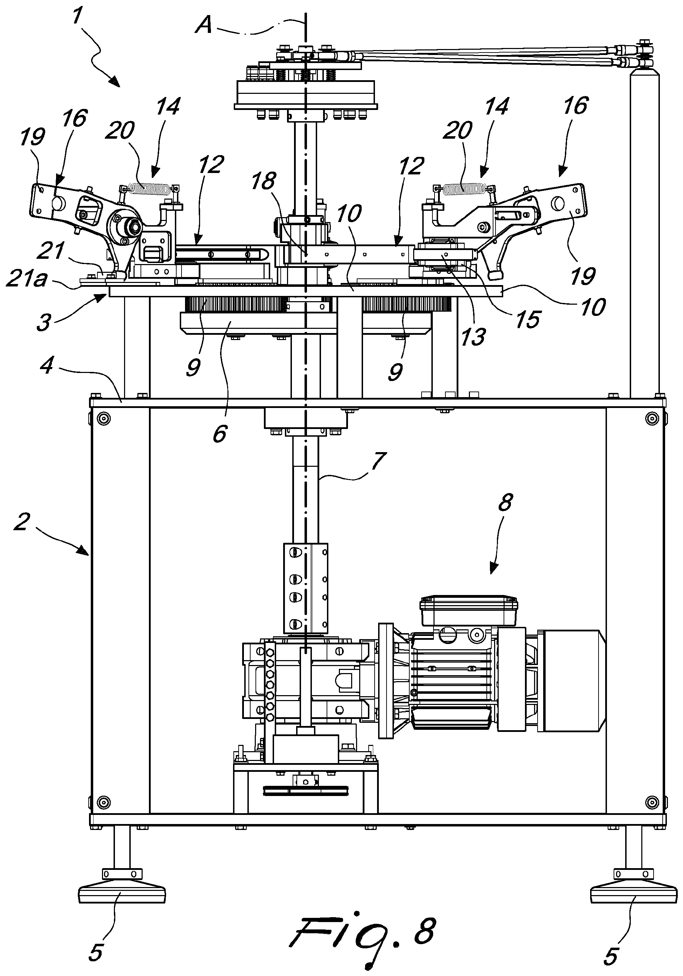

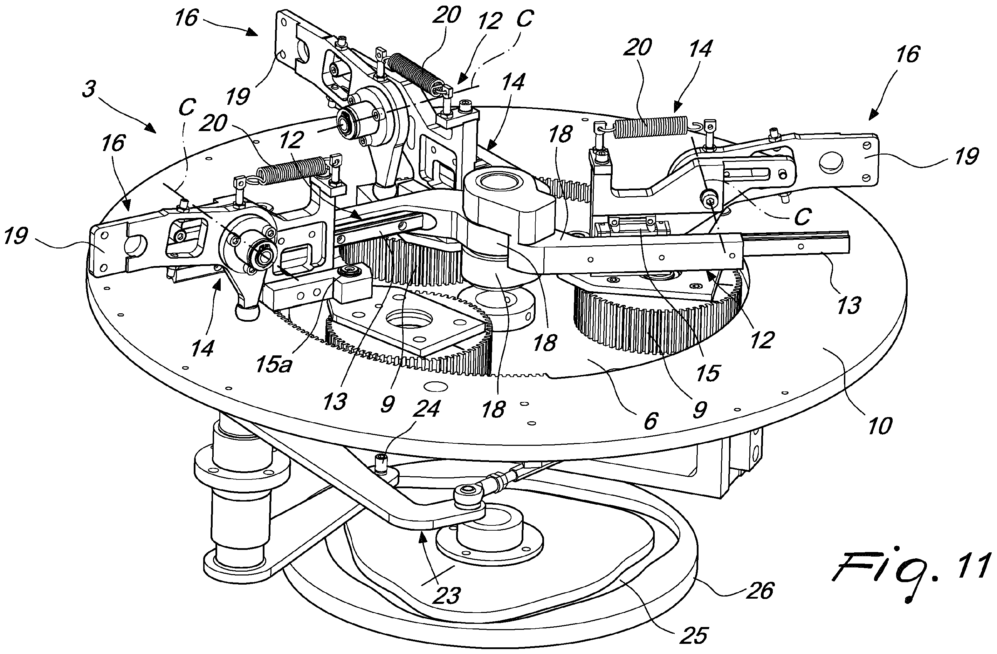

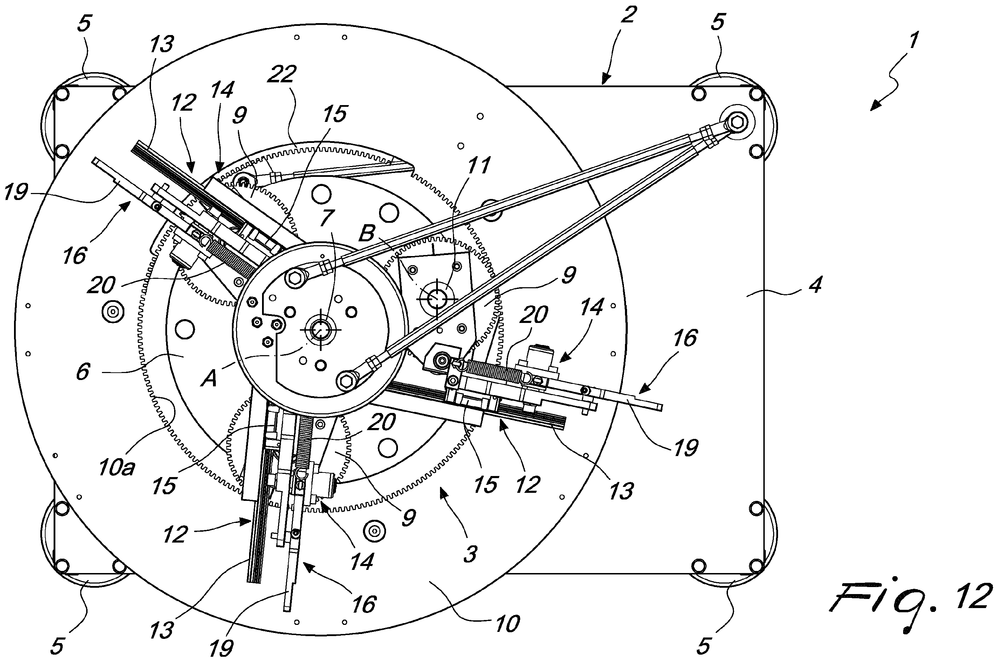

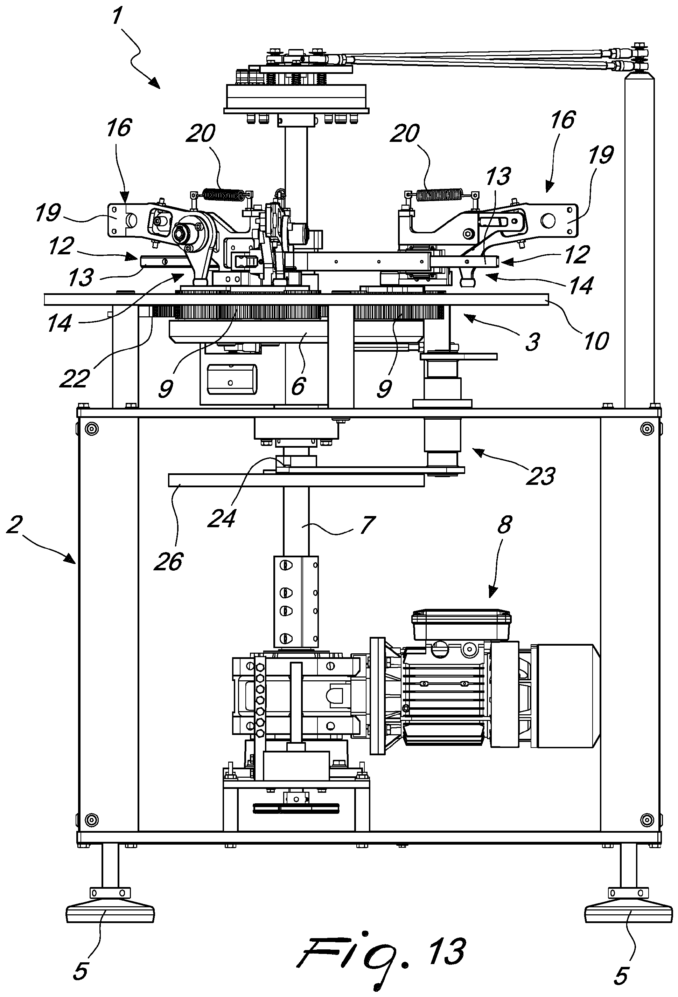

In a different embodiment, corresponding to the two solutions respectively of Figures 6-9 and 10-13, the station 1 comprises a plurality of linkages 18 which are coupled rotatably to respective longitudinal portions of the shaft 7. Each arm 12 is rigidly coupled to a respective linkage 18.

This is a solution that can profitably be adopted when the intention is for the various arms 12 (in this case three) to move in a mutually independent manner (the independence of the linkages 18 is a guarantee in this regard).

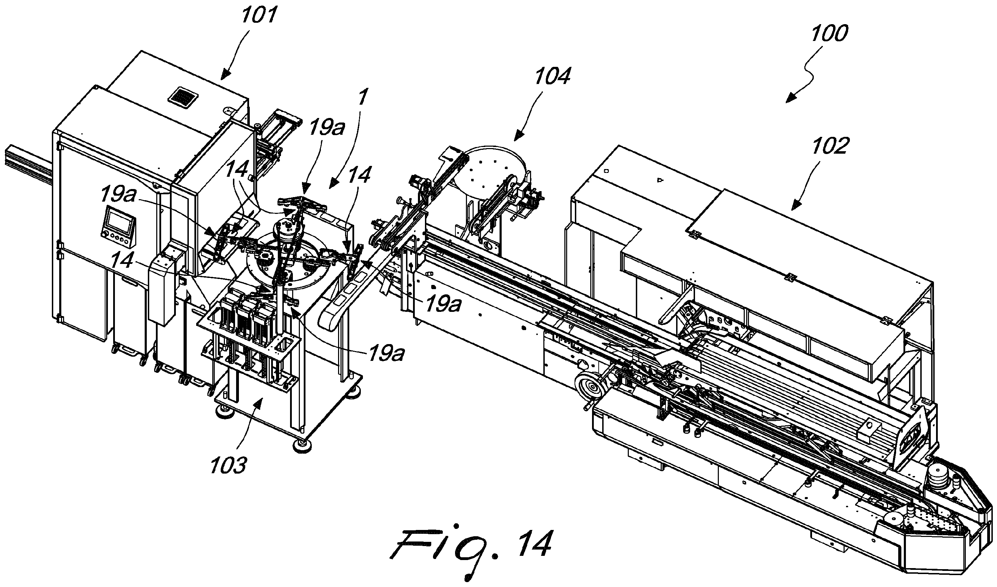

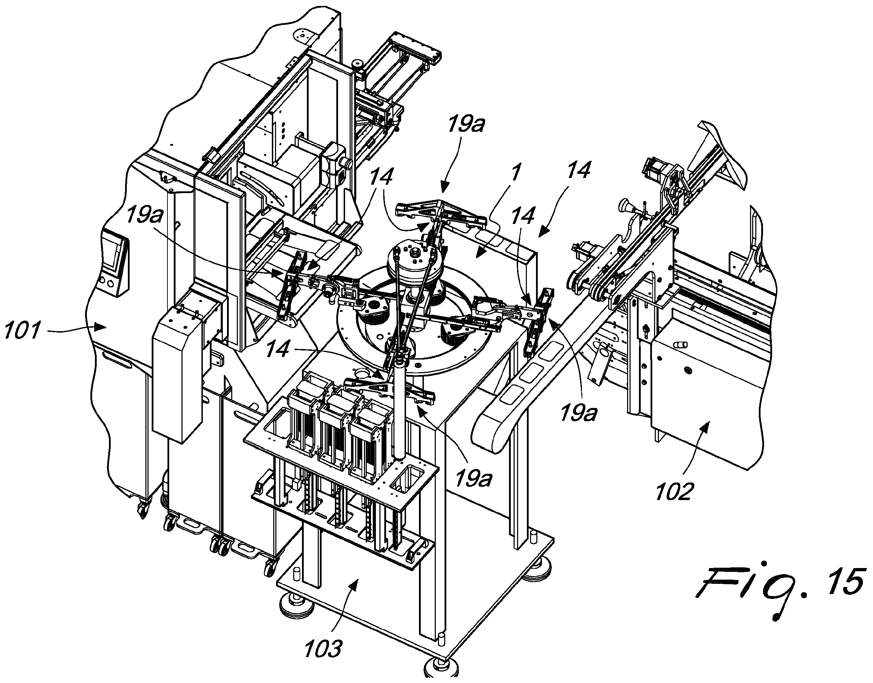

In the embodiment proposed in the accompanying figures for the purposes of non-limiting example of the invention, the operating member 16 comprises a lever 19 adapted to support a grip element 19a. The grip element 19a can be of any type, including conventional, as a function of the type of object to be gripped and of the technology that the person skilled in the art deems best suited to the circumstances. The grip element 19a can preferably be chosen to be a suction cup or a gripper (associated with respective actuation circuits), but other practical choices are not ruled out. Figures 14 and 15 show a possible example of a grip element 19a, which comprises a bracket for supporting a plurality of suction cups.

More specifically, in an embodiment of significant practical interest, but in any case non-limiting of the invention, the lever 19 (in addition to being supported rotatably by the slider 15 about the horizontal axis C) is kept in a first configuration by the constraining reaction of an elastic element 20 (a traction spring for example, which as shown in the accompanying figures can be anchored on the opposite side from the slider 15).

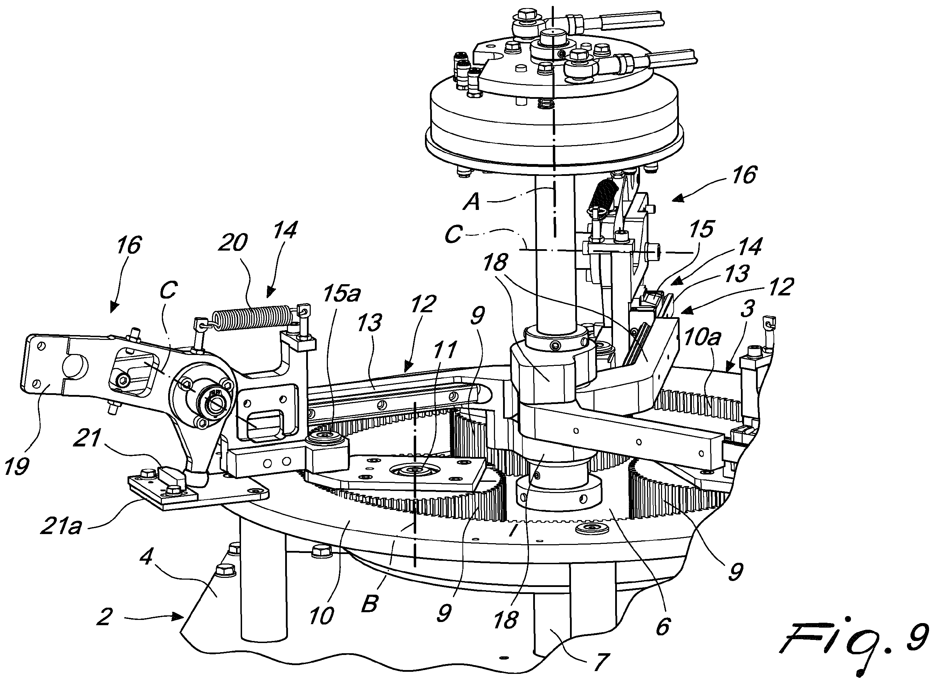

Furthermore, as shown in particular in Figure 9, an obstacle 21 is placed along the sliding stroke imposed by the track 13 upon the lever 19, so as to cause the forced rotation of the lever 19 with respect to the slider 15 (and with respect to the turntable 6), about the respective horizontal axis C, when the lever 19 strikes the obstacle 21. This happens in particular when the lever 19 and the slider 15 move away from the main axis A; in the return stroke, once the obstacle 21 is cleared, the constraining reaction of the elastic element 20 returns the lever 19 to the first configuration.

The rotation makes it possible to modify the orientation of the lever 19 and therefore, in particular, to lower its external portion, so as to facilitate the pickup and setdown of the object, as mentioned in the foregoing pages.

In more detail, in the embodiment of the accompanying figures the lever 19 is L-shaped, so as to form two mutually perpendicular limbs joined at a common end, about which the lever 19 can rotate with respect to the slider 15 (about the horizontal axis C): a first, inner limb, directed downward, is adapted to strike the obstacle 21, the second is directed outward and is adapted to support the chosen grip element 19a.

The unit 14 can in any case assume other shape structures (with or without the lever 19), while remaining within the scope of protection claimed herein.

The obstacle 21 can for example be constituted by a step which protrudes from the upper surface of a mount 21a, joined to the ring gear 10.

In a first embodiment, the obstacle 21 is not movable (as in the accompanying figures, wherein the mount 21a is anchored to the ring gear 10): the forced rotation of the lever 19 occurs in each cycle, and with the same characteristics or rule of motion.

Usefully, the obstacle 21 can alternatively perform a translation, perpendicular to the main axis A (in other words, it can perform a radial translational motion). For example, such a result can be obtained by providing a positioning system for the step (or other obstacle 21) that can be adjusted and handled dynamically.

This solution makes it possible to modify the point at which, while it is moving along the track 13, the slider 15 strikes the obstacle 21: this consequently modifies the extent of the rotation of the lever 19 and therefore the downward or upward excursion of the grip element 19a: for example when the objects are being set down, this makes it possible to layer them (because the descent of the grip element 19a stops a different heights).

It should be noted that the trajectory TR obtainable with the embodiments of Figures 1-5 and 6-9 features "pointed" cusps CU, because as soon as the slider 15 reaches its outer stroke limit and the unit 14 reaches the position of maximum extension (maximum distance from the main axis A), the continuation of the rotation about the respective secondary axis B of the corresponding planet gear 9 causes the slider 15 to immediately invert the direction of translation and then the unit 14 immediately begins the return stroke toward the main axis A. So the unit 14 stops only for a moment, before resuming its translation stroke in the opposite direction.

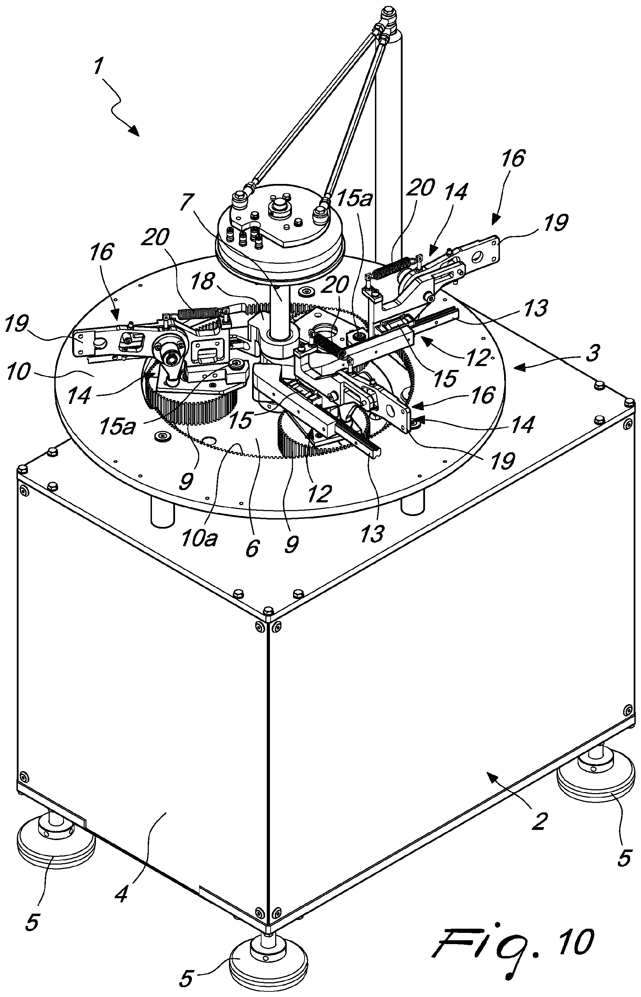

In the embodiment of Figures 10-13 there is an additional component which makes it possible to modify the behavior of the unit 14 and of the slider 15, proximately to and upon reaching the stroke limit mentioned above, so as to modify correspondingly the trajectory TR (which instead of the "pointed" CU cusp will thus present projections that are more "rounded" or beveled).

Advantageously in fact, the station 1 can comprise a plate 22, which faces and is proximate to a sector of the ring gear 10 (parallel to the latter) and which has a curved and toothed inner edge.

The plate 22 can move (parallel to the turntable 6) and in particular the inner edge can move along the pitch circle of the ring gear 10 at a discontinuity in the internal set of teeth 10a of the latter.

In other words, as can be seen from the accompanying figures, the plate 22 is arranged below and parallel to the ring gear 10, so that the toothed inner edge is aligned with a portion of the internal perimeter of the ring gear 10 which is intentionally not provided with teeth. In particular, as it moves, the inner edge travels the entire extension of such portion (or discontinuity).

Thus, during its rotation about the main axis A each planet gear 9 meshes (automatically) with this inner edge, when it reaches the discontinuity in the internal set of teeth 10a of the ring gear 10.

The plate 22 therefore stands in for the ring gear 10 for an angular sector equal to the angular extent of the discontinuity: the position, the dimensions and the travel of the inner edge of the plate 22 are chosen so as to obtain automatic meshing as soon as the planet gear 9 reaches the discontinuity, and so as not to interfere with the new meshing with the set of teeth 10a, once the planet gear 9 has finished rotating at the discontinuity.

So by virtue of the meshing with the plate 22 and by virtue of the movement of the latter, it is possible to modify the rule of motion of the unit 14, as mentioned on the foregoing pages.

In particular, a movement is imposed upon the plate 22 which is contrary to the movement produced by the rotation of the unit 14 about the main axis A: this makes it possible to keep the unit 14 stationary for a preset time along the track 13 (at the outer stroke limit), during the rotation about the main axis A, or in any case to "round" or "bevel" the cusp CU, and even also obtain, for a short stretch, a travel that is straight or circular.

So the effect obtained can be, for example, to track the motion of the stall upstream or downstream; in particular, this enables the unit 14, for some degrees of rotation of the turntable 6 about the main axis A, to match the component of motion which the object to be picked up (or the seat in which to set it down) may have at that same moment in the other stall the station 1 needs to interact with, in order to have zero relative movement and ensure an even more delicate and accurate transfer.

The manner in which the motion is imparted to the plate 22 and controlled may be any, according to requirements and to the state of the art.

More specifically, in the embodiment of the accompanying figures, which are illustrative but not limiting of the invention, the station 1 comprises a kinematic mechanism 23 for supporting the plate 22, comprising in turn (from the side opposite that of the plate 22) a sliding member 24, which can move along a contoured race 25 (provided in a slat 26 which behaves like a form of cam), which therefore defines the rule of motion of the toothed edge along the pitch circle.

As noted, the scope of protection claimed herein extends to the use of the station 1 in any context; likewise, another object of the protection is a specific plant 100 designed for preparing packages of products (like the one in Figures 14 and 15).

Such packaging (for example intended for the cosmetic sector, the food sector or the pharmaceutical sector) comprises a primary container (a box or carton, for example made of cardboard or polymeric material) of an enclosure (or secondary container) which accommodates the actual product (medicine, cosmetic, food product etc). So the enclosure could be a pouch, a blister pack, a vial, a bottle, a drum, a stick, a preformed tub or the like.

So according to the invention, the plant 100 comprises first of all at least one station 1 of the type described up to this point. In particular therefore, as has already been seen, the turntable 6 of the station 1 defines, with its rotation about the main axis A, a plurality of useful angular coordinates, as defined on the foregoing pages.

Furthermore, according to the invention, the plant 100 comprises at least one preparation assembly 101, which is configured at least to prepare the enclosure that accommodates the product. This assembly 101 is arranged substantially along a first useful angular coordinate.

That is, in other words, the assembly 101 is arranged at an angular coordinate in which the unit 14 is in a cusp CU or protrusion, so as to enable the unit 14 to pick up the enclosure prepared by the assembly 101.

Basically, the assembly 101 can also be conventional and chosen according to the specific requirements of the case.

Effectively therefore, in the application illustrated the task of the station 1 is to transfer objects which comprise enclosures accommodating the product, and therefore, as mentioned, can be pouches, blister packs, vials, bottles, drums, sticks, preformed tubs or the like.

Furthermore, according to the invention, the plant 100 comprises at least one packaging machine 102, which is configured at least to insert an enclosure that accommodates the product into a primary container. The machine 102, which in and of itself may be conventional, is therefore a cartoning machine.

Such machine 102 is arranged substantially along a second useful angular coordinate.

That is, in other words, the packaging machine 102 is arranged at another angular coordinate in which the unit 14 is in a cusp CU or protrusion, so as to enable that unit 14 to set down the enclosure in that machine 102.

It should be noted that the station 1 preferably offers other useful angular coordinates (the trajectory TR of the unit 14 has other cusps CU or projections). These cusps can advantageously be used to interact in other ways with the objects transferred, and so give the plant 100 further functionalities.

For example (and with further reference to the accompanying Figures 14-15), the plant 1 can comprise a safety buffer space 103 arranged substantially along a third useful angular coordinate (interposed between the first and the second, with respect to the direction of rotation of the turntable 6). The buffer space 103 makes it possible to temporarily store or retrieve objects (enclosures) before they are sent to the packaging machine 102, to compensate any differences in productivity (number of units, objects or products processed in the reference time interval) between the latter and the assembly 101.

Furthermore, or alternatively, the plant 100 can comprise an outlet 104, arranged substantially along a fourth useful angular coordinate (placed after the second, with respect to the direction of rotation of the turntable 6). In the outlet, the station 1 can deposit any defective enclosures, which must not be sent to the machine 102.

The operation of the station and of the plant have already been described.

It has already been seen in particular that the particular structure of the gearing 3 and its cooperation with the arms 12 and the units 14 confer a particular trajectory TR on the latter, which makes it possible to achieve the set aim.

In fact, at the cusps CU or projections that characterize the trajectory TR, the units 14 can pick up and set down objects (for example but not limited to enclosures), by moving up or down by virtue of the possibility to rotate about the horizontal axis C and therefore moving rapidly from the pickup station to the setdown station by virtue of the rotation of the turntable 6 (which can readily be at a high speed).

This makes it possible to transfer objects with high productivity rates, delivering them in real time to the cartoning machine or to another stall downstream.

Likewise, the plant 100 that contains the station 1 can operate at high productivity rates and without interruptions or bottlenecks caused by the step of transferring the enclosures to the machine 102, which performs the final packaging.

The other cusps CU or projections (not used for setdown or pickup) can be positively used to interact with other machines (in any case with the possibility to rotate the unit 14 about the horizontal axis C), thus rendering the station 1 particularly versatile.

The invention thus conceived is susceptible of numerous modifications and variations, all of which are within the scope of the appended claims.

In practice, the materials employed, as well as the dimensions, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. An object transfer station, **characterized in that** it comprises at least:
- a supporting frame (2) for a gearing (3) comprising at least one turntable (6) turned about a fixed main axis (A) by a rotating shaft (7), and at least one planet gear (9), which meshes with a ring gear (10) provided with an internal set of teeth (10a) and supported by said turntable (6) so that it can rotate about a respective secondary axis (B), which rotates about said main axis (A),
- at least one unit (14) for transferring objects wherein the at least one unit (14) comprises an operating member (16) configured at least to pick up and temporarily hold objects,
**characterized in that** the object transfer station further comprises:
- at least one arm (12), which defines a track (13) for guiding translation and is supported directly or indirectly by said shaft (7) so that it can rotate about said main axis (A),
wherein the at least one unit (14) for transferring objects comprises a slider (15), coupled slideably to said track (13) of said at least one arm (12) and coupled rotatably to said at least one planet gear (9), and wherein the operating member (16) is supported by said slider (15) so that it can rotate about a respective horizontal axis (C).

2. The station according to claim 1, **characterized in that** it comprises at least:
- a plurality of said planet gears (9), which mesh with said ring gear (10) and are supported by said turntable (6) so that they can rotate about respective said secondary axes (B),
- a plurality of said arms (12), which define respective said tracks (13) and are supported, directly or indirectly, by said shaft (7) so that they can rotate about said main axis (A),
- a plurality of said units (14) for transferring objects, each one of said units (14) comprising a respective said slider (15), coupled slideably to said track (13) of a corresponding said arm (12) and coupled rotatably to a corresponding said planet gear (9), and a respective said operating member (16), supported by the corresponding said slider (15) so that it can rotate about a corresponding said horizontal axis (C).

3. The station according to claim 1, **characterized in that** it comprises a central supporting block (17), coupled rotatably to said shaft (7), each one of said arms (12) being rigidly supported by said block (17).

4. The station according to claim 1 or 2, **characterized in that** it comprises a plurality of linkages (18) coupled rotatably to respective longitudinal portions of said shaft (7), each one of said arms (12) being rigidly coupled to a respective said linkage (18).

5. The station according to one or more of the preceding claims, **characterized in that** said at least one operating member (16) comprises a lever (19) adapted to support a grip element (19a), preferably chosen to be a suction cup or a gripper.

6. The station according to one or more of the preceding claims, **characterized in that** at least one said lever (19) is kept in a first configuration by the constraining reaction of an elastic element (20), an obstacle (21) being placed along the sliding stroke imposed by said track (13) upon said at least one lever (19) for the forced rotation of said at least one lever (19) with respect to said slider (15) about the respective said horizontal axis (C).

7. The station according to one or more of the preceding claims, **characterized in that** said obstacle (21) can translate at right angles to said main axis (A).

8. The station according to one or more of the preceding claims, **characterized in that** it comprises a plate (22) which faces and is proximate to a sector of said ring gear (10), is provided with a curved and toothed inner edge, and is movable along the pitch circle of said ring gear (10) at a discontinuity in said internal set of teeth (10a) of said ring gear (10), during its rotation about said main axis (A) each of said planet gears (9) meshing with said inner edge, upon reaching said discontinuity in said internal set of teeth (10a).

9. The station according to claim 8, **characterized in that** it comprises a kinematic mechanism (23) for supporting said plate (22), comprising a sliding member (24) which can move along a contoured race (25) which defines the rule of motion of said toothed edge along said pitch circle.

10. A product packaging preparation plant, packaging of the type comprising a primary container of an enclosure that accommodates the product, **characterized in that** it comprises at least:
- a station (1) according to one or more of the preceding claims, provided with a said turntable (6) which defines, with its rotation about said main axis (A), a plurality of useful angular coordinates, wherein said slider (15) is located along the respective said track (13) substantially at the outer stroke limit, at the maximum distance from said main axis (A),
- a preparation assembly (101), configured at least for preparing the enclosure that accommodates the product and arranged substantially along a first said useful angular coordinate,
- a packaging machine (102), configured at least for inserting an enclosure that accommodates the product into a primary container and arranged substantially along a second said useful angular coordinate.

## Patentansprüche

1. Eine Objektübergabestation, **dadurch gekennzeichnet, dass** sie mindestens Folgendes umfasst:
- einen Tragrahmen (2) für ein Getriebe (3), das mindestens einen Drehtisch (6) umfasst, gedreht um eine feste Hauptachse (A) von einer sich drehenden Welle (7), und mindestens ein Planetengetriebe (9), das in ein Hohlrad (10) eingreift, welches mit einem inneren Satz von Zähnen (10a) ausgestattet und von dem Drehtisch (6) so getragen ist, dass es sich um eine dazugehörige zweite Achse (B) drehen kann, die sich um die Hauptachse (A) dreht;
- mindestens eine Einheit (14) für die Übergabe von Objekten, wobei die mindestens eine Einheit (14) ein Arbeitselement (16) umfasst, das ausgebildet ist, um Objekte mindestens aufzunehmen und vorübergehend zu halten;
**dadurch gekennzeichnet, dass** die Objektübergabestation weiter Folgendes umfasst:
- mindestens einen Arm (12), der eine Schiene (13) zum Leiten einer Translationsbewegung bestimmt und direkt oder indirekt von der Welle (7) getragen ist, so dass er sich um die Hauptachse (A) drehen kann,
wobei die mindestens eine Einheit (14) zur Übergabe von Objekten einen Schieber (15) umfasst, gleitend mit der Schiene (13) des mindestens einen Arms (12) gekoppelt und drehbar mit dem mindestens einen Planetengetriebe (9) verbunden, und wobei das Arbeitselement (16) so auf dem Schieber (15) gelagert ist, dass es sich um eine entsprechende horizontale Achse (C) drehen kann.

2. Die Station gemäß Anspruch 1, **dadurch gekennzeichnet, dass** sie mindestens Folgendes umfasst:
- eine Vielzahl der Planetengetriebe (9), die in das Hohlrad (10) eingreifen und von dem Drehtisch (6) so getragen sind, dass sie sich um die dazugehörigen zweiten Achsen (B) drehen können,
- eine Vielzahl der Arme (12), die die entsprechenden Schienen (13) bestimmen und direkt oder indirekt von der Welle (7) getragen sind, so dass sie sich um die Hauptachse (A) drehen können,
eine Vielzahl der Einheiten (14) zur Übergabe von Objekten, wobei jede der Einheiten (14) einen entsprechenden Schieber (15) umfasst, der gleitend mit der Schiene (13) des entsprechenden Arms (12) gekoppelt und drehbar mit dem entsprechenden Planetengetriebe (9) verbunden ist, und das entsprechende Arbeitselement (16), so auf dem entsprechenden Schieber (15) gelagert, dass es sich um die entsprechende horizontale Achse (C) drehen kann.

3. Die Station gemäß Anspruch 1, **dadurch gekennzeichnet, dass** sie einen zentralen tragenden Block (17) umfasst, der drehbar mit der Welle (7) gekoppelt ist, wobei jeder der Arme (12) starr von dem Block (17) getragen ist.

4. Die Station gemäß Anspruch 1 oder 2, **dadurch gekennzeichnet, dass** sie eine Vielzahl von Verbindungselemente (18) umfasst, drehbar mit entsprechenden Längsabschnitten der Welle (7) gekoppelt, wobei jeder der Arme (12) starr mit einem entsprechenden Verbindungselement (18) gekoppelt ist.

5. Die Station gemäß einem oder mehreren der obigen Ansprüche, **dadurch gekennzeichnet, dass** das mindestens eine Arbeitselement (16) einen Hebel (19) umfasst, ausgebildet, um ein Greifelement (19a) zu tragen, das vorzugsweise ausgewählt ist, um ein Saugnapf oder ein Greifer zu sein.

6. Die Station gemäß einem oder mehreren der obigen Ansprüche, **dadurch gekennzeichnet, dass** der mindestens eine Hebel (19) durch die einschränkende Reaktion eines elastischen Elements (20) in einer ersten Konfiguration gehalten wird, wobei ein Hindernis (21) entlang dem von der Schiene (13) festgelegten Gleithub für den mindestens einen Hebel (19) positioniert ist; zur erzwungenen Drehung des mindestens einen Hebels (19) mit Bezug auf den Schieber (15) um die entsprechende horizontale Achse (C).

7. Die Station gemäß einem oder mehreren der obigen Ansprüche, **dadurch gekennzeichnet, dass** das Hindernis (21) eine Translationsbewegung in rechten Winkeln zu der Hauptachse (A) durchführen kann.

8. Die Station gemäß einem oder mehreren der obigen Ansprüche, **dadurch gekennzeichnet, dass** sie eine Platte (22) umfasst, die einem Sektor des Hohlrades (10) zugewandt ist und an ihn angrenzt, mit einem gekrümmten und gezähnten Innenrand versehen und entlang dem Rollkreis des Hohlrades (10) an einer Diskontinuität in dem inneren Satz von Zähnen (10a) des Hohlrades (10) beweglich ist, wobei während der Rotation um die Hauptachse (A) jedes der Planetengetriebe (9) beim Erreichen der Diskontinuität in dem inneren Satz von Zähnen (10a) in den Innenrand eingreift.

9. Die Station gemäß Anspruch 8, **dadurch gekennzeichnet, dass** sie einen kinematischen Mechanismus (23) zum Tragen der Platte (22) umfasst, der ein Gleitelement (24) umfasst, das sich entlang einer konturierten Bahn (25) bewegen kann, welche die Bewegungsregel des gezähnten Randes entlang dem Rollkreis bestimmt.

10. Eine Produktverpackungsvorbereitungsanlage, wobei die Verpackung von dem Typ ist, der einen Hauptbehälter für eine Verpackung umfasst, die das Produkt enthält; **dadurch gekennzeichnet, dass** sie mindestens Folgendes umfasst:
- eine Station (1) gemäß einem oder mehreren der obigen Ansprüche, ausgestattet mit dem Drehtisch (6), welcher mit seiner Drehung um die Hauptachse (A) eine Vielzahl von Nutzungs-Winkelkoordinaten bestimmt, wobei der Schieber (15) sich entlang der entsprechenden Schiene (13), im Wesentlichen an der äußeren Hubbegrenzung, in maximalem Abstand von der Hauptachse (A), befindet,
- einen Vorbereitungsaufbau (101), konfiguriert, um zumindest die Verpackung vorzubereiten, die das Produkt aufnimmt, und im Wesentlichen angeordnet entlang der ersten Nutzungs-Winkelkoordinate,
- eine Verpackungsmaschine (102), zumindest konfiguriert zum Einsetzen einer Verpackung, die das Produkt aufnimmt, in einen primären Behälter und im Wesentlichen angeordnet entlang der zweiten Nutzungs-Winkelkoordinate.

## Revendications

1. Station de transfert d'objets, **caractérisée en ce qu'**elle comprend au moins :
- un châssis de support (2) pour un engrenage (3) comprenant au moins un plateau tournant (6) entraîné en rotation autour d'un axe principal fixe (A) par un arbre rotatif (7), et au moins un pignon planétaire (9), qui engrène avec une couronne dentée (10) pourvue d'une denture interne (10a) et supportée par ledit plateau tournant (6) de manière à pouvoir tourner autour d'un axe secondaire respectif (B), qui tourne autour dudit axe principal (A),
- au moins une unité (14) de transfert d'objets, ladite au moins une unité (14) comprenant un organe de manutention (16) configuré au moins pour saisir et maintenir temporairement des objets, **caractérisée en ce que** la station de transfert d'objets comprend en outre :
- au moins un bras (12), qui définit une glissière (13) destinée à guider la translation et qui est supporté directement ou indirectement par ledit arbre (7) de manière à pouvoir tourner autour dudit axe principal (A),
où ladite au moins une unité (14) de transfert d'objets comprend un coulisseau (15), couplé de manière coulissante à ladite glissière (13) dudit au moins un bras (12) et couplé de manière rotative audit au moins un pignon planétaire (9), et où l'élément d'actionnement (16) est supporté par ledit coulisseau (15) de manière à pouvoir tourner autour d'un axe horizontal respectif (C).

2. La station selon la revendication 1, **caractérisée en ce qu'**elle comprend au moins :
- une pluralité desdits pignons planétaires (9), qui engrènent avec ladite couronne dentée (10) et sont supportés par ledit plateau tournant (6) de manière à pouvoir tourner autour de leurs axes secondaires respectifs (B),
- une pluralité desdits bras (12), qui définissent desdites glissières (13) respectives et sont supportés, directement ou indirectement, par ledit arbre (7) de manière à pouvoir tourner autour dudit axe principal (A),
- une pluralité desdites unités (14) pour transférer d'objets, chacune desdites unités (14) comprenant un coulisseau (15) respectif, couplé de manière coulissante à ladite glissière (13) d'un bras (12) correspondant et couplé de manière rotative à un pignon planétaire (9) correspondant, et un élément d'actionnement (16) respectif, supporté par ledit coulisseau (15) correspondant de manière à pouvoir tourner autour d'un axe horizontal (C) correspondant.

3. La station selon la revendication 1, **caractérisée en ce qu'**elle comprend un bloc de support central (17), couplé de manière rotative audit arbre (7), chacun desdits bras (12) étant supporté de manière rigide par ledit bloc (17).

4. La station selon la revendication 1 ou 2, **caractérisée en ce qu'**elle comprend une pluralité de bielles (18) couplées de manière rotative à des portions longitudinales respectives dudit arbre (7), chacun desdits bras (12) étant couplé de manière rigide à une dite bielle respective (18).

5. La station selon l'une ou plusieurs des revendications précédentes, **caractérisée en ce que** ledit au moins un élément d'actionnement (16) comprend un levier (19) adapté pour supporter un élément de préhension (19a), de préférence choisi pour être une ventouse ou une pince.

6. La station selon l'une ou plusieurs des revendications précédentes, **caractérisée en ce qu'**au moins un desdits leviers (19) est maintenu dans une première configuration par la réaction de contrainte d'un élément élastique (20), un obstacle (21) étant placé le long de la course de coulissement imposée par ladite glissière (13) audit au moins un levier (19) pour la rotation forcée dudit au moins un levier (19) par rapport audit coulisseau (15) autour dudit axe horizontal (C) respectif.

7. La station selon l'une ou plusieurs des revendications précédentes, **caractérisée en ce que** ledit obstacle (21) peut se déplacer perpendiculairement audit axe principal (A).

8. La station selon l'une ou plusieurs des revendications précédentes, **caractérisée en ce qu'**elle comprend une plaque (22) qui fait face à un secteur de ladite couronne dentée (10) et est proche de celui-ci, est pourvue d'un bord intérieur courbe et denté, et est mobile le long du cercle primitif de ladite couronne dentée (10) au niveau d'une discontinuité dans ladite denture interne (10a) de ladite couronne dentée (10), lors de sa rotation autour dudit axe principal (A), chacun desdits pignons planétaires (9) s'engrenant avec ledit bord intérieur, lorsqu'il atteint ladite discontinuité dans ladite denture interne (10a).

9. La station selon la revendication 8, **caractérisée en ce qu'**elle comprend un mécanisme cinématique (23) destiné à supporter ladite plaque (22), comprenant un élément coulissant (24) pouvant se déplacer le long d'une piste profilée (25) qui définit la loi de mouvement dudit bord denté le long dudit cercle primitif.

10. Installation de préparation d'emballage de produits, du type comprenant un conteneur primaire d'une enceinte destinée à recevoir le produit, **caractérisée en ce qu'**elle comprend au moins:
- une station (1) selon une ou plusieurs des revendications précédentes, munie d'un plateau tournant (6) qui définit, par sa rotation autour dudit axe principal (A), une pluralité de coordonnées angulaires utiles, où ledit coulisseau (15) est situé le long de ladite glissière (13) respective sensiblement à la limite extérieure de course, à la distance maximale dudit axe principal (A),
- un ensemble de préparation (101), configuré au moins pour préparer l'enceinte destinée à recevoir le produit et disposé sensiblement le long d'une première desdites coordonnées angulaires utiles,
- une machine d'emballage (102), configurée au moins pour insérer une enceinte destinée à recevoir le produit dans un conteneur primaire et disposée sensiblement le long d'une deuxième desdites coordonnées angulaires utiles.
